# EUROPÄISCHE PATENTSCHRIFT

(11) **EP 3 028 836 B1**
(45) Veröffentlichungstag und Bekanntmachung des Hinweises auf die Patenterteilung: **01.11.2017**
(21) Anmeldenummer: 14196358.7
(22) Anmeldetag: 04.12.2014
(51) Int. Cl.: B29C 65/10

(54) **Schweißautomat zum Verbinden von überlappenden Materialbahnen**
Welding machine for connecting of overlapping sheets of material
Machine de soudure destinée à relier des bandes de matériau se chevauchant

(43) Veröffentlichungstag der Anmeldung: 08.06.2016
(73) Patentinhaber: Leister Technologies AG, 6056 Kägiswil (CH)
(72) Erfinder: Bürgler, Roger, 6373 Ennetbürgen (CH); Schilter, Felix, 6460 Altdorf (CH)
(74) Vertreter: Klocke, Peter

(56) Entgegenhaltungen:
- EP-A2- 2 441 568
- FR-A1- 2 571 304

## Beschreibung

Die Erfindung betrifft einen Schweißautomat zum randseitigen Verbinden von überlappenden oberen Materialbahnen mit überlappten unteren Materialbahnen, die unter Wärmeeinwirkung und anschließender Druckbeaufschlagung stoffschlüssig miteinander verbindbar sind, mit einem Fahrgestell, an dem zumindest Lauflenkrollen, eine Heizeinrichtung und mindestens eine Andruckrolle angeordnet sind, wobei die Heizeinrichtung ein seitlich auskragendes zwischen die Ränder der Materialbahnen einführbares Kontaktheizelement aufweist und die auf die Ränder der Materialbahnen aufsetzbare Andruckrolle in Arbeitsfahrtrichtung hinter dem Kontaktheizelement angeordnet und von einem Elektromotor mit nachgeschaltetem Untersetzungsgetriebe angetrieben ist, wobei das Fahrgestell L-förmig oder T-förmig mit einem sich in Arbeitsfahrtrichtung erstreckenden Längsschenkel und einem orthogonal zum Längsschenkel verlaufenden Querschenkel ausgebildet ist, wobei das Untersetzungsgetriebe ein Umlaufrädergetriebe ist und der Elektromotor und das Untersetzungsgetriebe zu einem Trommelantriebsmotor vereint sind, .

Derartige Vorrichtungen zum Verschweißen von flächigen Materialbahnen, beispielsweise aus Bitumen- oder Kunststoffmaterial, sind bereits in vielfältigen Ausführungsformen bekannt. So beschreibt die EP 1 371 474 A1 einen Schweißautomat zum Verbinden von mit überlappenden Rändern verlegten Materialbahnen, bei dem ein angetriebenes Fahrgestell entlang der Überlappungszone der zu verbindenden Materialbahnen geführt wird und die Materialbahnen durch ein auf dem Traggestell angeordnetes mitgeführtes Schweißgerät untereinander verbunden werden. Die Materialbahnen werden miteinander verbunden, indem diese mit einer Heizeinrichtung des Schweißgerätes an den einander überlappenden Randbereichen mittels eines seitlich auskragenden, zwischen deren Randbereiche einführbaren Kontaktheizelements lokal erhitzt werden und anschließend mittels einer Andruckeinrichtung, die eine auf die plastifizierten Randbereiche aufsetzbare Andruckrolle aufweist, eine innige, d.h. stoffschlüssige Verbindung zwischen den Randbereichen der Materialbahnen hergestellt wird. Die Wärme wird beispielsweise durch Heißluft, die von einem Elektro- oder Gasheizelement der Heizeinrichtung erzeugt wird, zu den entsprechenden Randbereichen der Materialbahnen geleitet, wobei diese an dem Kontaktheizelement austritt. Die Andruckrolle ist bei dem bekannten Schweißautomat gleichzeitig Antriebsrolle für das Fahrgestell.

Nachteilig erscheint bei diesem Schweißautomaten, dass der Elektromotor und das diesem nachgeschaltete Untersetzungsgetriebe viel Raum beansprucht und dass eine aufwändige Kraftübertragungseinrichtung die Antriebsrolle (Andruckrolle) mit dem Untersetzungsgetriebe verbindet. Dies bedingt wiederum eine voluminöse Bauform, die bei der Anwendung des Schweißautomaten auf freistehender Untergrundfläche nicht störend, jedoch für ein randnahes Arbeiten an Rändern oder Kanten der Fläche oft hinderlich ist. Zudem ist der Schweißbereich bei dem bekannten Schweißgerät nur eingeschränkt einsehbar, da das Kontaktheizelement und die Andruckrolle von dem Elektromotor, dem Untersetzungsgetriebe, der Kraftübertragungseinrichtung und/oder dem Fahrgestell teilweise verdeckt sind.

Zum Stand der Technik wird weiterhin auf die Druckschriften FR 2 571 304 A1 und EP 32 441 568 A1 verwiesen.

Die Druckschrift FR 2 571 304 A1 offenbart ein Schweißgerät zum Verschweißen von Kunststoffbahnen, bestehend aus einem Geräterahmen, einer vor der Verschweißungsstelle längs verschiebbar angeordneten Heizeinrichtung und einander gegenüberliegenden und aneinander pressbaren Andrückrollen, von denen jede von einem eigenen Motor angetrieben ist, wobei die Motoren mit einem gesonderten Steuergerät verbunden und mit ihren Drehachsen parallel zu den Achsen der Andrückrollen ausgerichtet sind. Jeder der Motoren ist auf einem mit seiner Längsachse zur Motorachse quer verlaufenden Rahmenprofil angeordnet, wobei die Rahmenprofile an ihren den Motoren gegenüberliegenden Enden um eine zu den Achsen der Andrückrollen bzw. der Motoren parallel verlaufende Achse verdrehbar miteinander verbunden sind und die Achsen der Motoren koaxial zu den Achsen der Andrückrollen verlaufen. Zwischen jedem Motor und der diesem zugeordneten Andrückrolle ist ein Planetengetriebe zwischengeschaltet.

Die Druckschrift EP 32 441 568 A1 lehrt eine Planenschweißmaschine zum Verschweißen wenigstens zweier in einander bereichsweise überlappenden Lagen liegenden Kunststofffolien, mit einer Heißluftvorrichtung zur Erwärmung des Folienmaterials und mit wenigstens einer in Nähe der Heißluftvorrichtung und in Bewegungsrichtung der Maschine gesehen hinter der Heißluftvorrichtung angeordnete Druckrolle sowie mit einer mit der Druckrolle über eine gemeinsame Achse verbundenen und zu dieser parallel beabstandet angeordneten Laufrolle sowie mit einem Antrieb für diese Achse. Dabei ist wenigstens eine der Rollen, d.h. die Druckrolle und/oder die Laufrolle, durch Herausziehen in Achsrichtung aus einer Stellung, in der sie im kraftschlüssigen Eingriff mit der angetriebenen Achse steht, in eine neutrale Stellung bringbar, in der sie von der Achse entkoppelt und gegenüber dieser frei drehbar ist, wobei die Rolle entgegen einen Rastwiderstand aus der Eingriffsstellung herausziehbar ist und sowohl in der Eingriffsstellung als auch in der neutralen Stellung jeweils durch Einrasten in axialer Richtung fixiert ist.

Ausgehend von diesem Stand der Technik liegt der Erfindung die Aufgabe zugrunde, einen gattungsgemäßen Schweißautomaten mit einer kompakteren Bauform vorzuschlagen, mit dem auch randnahes Arbeiten an Brüstungen, Lichtschächten, Kaminen usw. problemlos möglich ist und bei dem der jeweilige momentane Schweißbereich gut einsehbar ist.

Diese Aufgabe wird erfindungsgemäß durch einen Schweißautomat mit den Merkmalen des unabhängigen Patentanspruchs 1 gelöst. Weitere vorteilhafte Ausführungsformen der Erfindung sind den rückbezogenen Patentansprüchen zu entnehmen.

Kerngedanke der vorliegenden Erfindung ist es, ein neuartiges Antriebskonzept für einen gattungsgemäßen Schweißautomaten mit den Merkmalen des Oberbegriffs des unabhängigen Patentanspruchs 1 zu verwirklichen, um eine möglichst kompakte Bauweise zu erreichen. Das neue Antriebskonzept sieht vor, den Elektromotor und das Untersetzungsgetriebe in die Andruckrolle zu integrieren, den Querschenkel des Fahrgestells, an dem die Laufrollen angeordnet sind, gegenüber dem Längsschenkel des Fahrgestells, der die Heizeinrichtung trägt, seitlich verschiebbar auszubilden und die Andruckrolle modular aufzubauen, um deren Breite variabel festlegen zu können.

Danach weist der erfindungsgemäße Schweißautomat zum Antrieb einen Trommelantriebsmotor auf, wobei der Elektromotor ein bürstenloser Gleichstrommotor ist, der zusammen mit dem Umlaufrädergetriebe den Trommelantriebsmotor bildet. Erfindungsgemäß ist dieser Trommelantriebsmotor in die Andruckrolle zumindest teilweise integriert, d.h. in der Andruckrolle aufgenommen. In einer Ausführungsform übergreift die Andruckrolle den Trommelantriebsmotor vollständig, in anderen Ausführungsformen nur teilweise. Dabei ist der Trommelantriebsmotor an dem sich in Antriebsfahrtrichtung erstreckenden Längsschenkel des Fahrgestells befestigt. Er steht einseitig über den Längsschenkel vor und trägt die Andruckrolle. Er treibt die Andruckrolle motorisch an. Dabei erstreckt sich die Andruckrolle nahe dem Längsschenkel des Fahrgestells und rotiert in der Längsrichtung des Längsschenkels. Der Elektromotor des Trommelantriebsmotors hat vorzugsweise eine Leistungsaufnahme von wenigstens 30 Watt, vorzugsweise von mindestens 50 Watt. Das Umlaufrädergetriebe gibt vorzugsweise ein Drehmoment von mindestens 6 Nm ab. Damit kann das erfindungsgemäße Schweißgerät auf Ebenen wie auch auf leicht ansteigenden Untergründen problemlos eigenständig fahren.

Bürstenlose Gleichstrommotoren sind bekannt. Sie basieren auf einer Synchronmaschine mit Erregung durch Permanentmagnete. Die oft dreisträngige Drehstromwicklung erzeugt ein drehendes magnetisches Feld, welches den permanent erregten Rotor mitzieht. Durch eine geeignete Ansteuerschaltung wird ein Regelverhalten erzielt, welches dem Verhalten einer Gleichstrommaschine weitgehend entspricht. Hierzu kann ein vereinfachter Frequenzumrichter mit Blockkommutierung eingesetzt werden, bei dem der Zwischenkreis direkt mit einer variablen Gleichspannung gespeist wird, um auf diese Weise die Drehzahl des Motors zu steuern.

Umlaufrädergetriebe sind ebenfalls bekannt. Sie werden oft auch als Planetengetriebe bezeichnet. Derartige Getriebe sind Zahnrad- oder Reibradgetriebe, die neben gestellfesten Wellen auch Achsen besitzen, die auf Kreisbahnen im Gestell umlaufen. In vielen Ausführungen sind die umlaufenden Achsen parallel zu den gestellfesten Wellen. Daher werden Umlaufrädergetriebe oft auch als Planetenrädergetriebe bezeichnet. Die auf den umlaufenden Achsen drehenden Zahnräder umkreisen dabei ein zentrales Zahnrad. Umlaufrädergetriebe sind kompaktbauende Getriebe mit dem besonderen Merkmal, dass Antriebs- und Abtriebswelle miteinander fluchten.

Unter einem Trommelmotor wird üblicherweise eine sehr kompakte Einheit verstanden, bei der der Elektromotor und das Getriebe bereits in einem gemeinsamen Gehäuse untergebracht sind. An dem Gehäuse sind in der Regel bereits mechanische Befestigungsmittel und elektrische Anschlusselemente zum mechanischen Verbinden und elektrischen Anschließen des Motors vorgesehen. Abhängig von der Ausführungsform stehen dabei Wellen oder Zapfen des Trommelmotors stirnseitig über das Gehäuse vor, wobei das Drehmoment des Elektromotors über das Getriebe vorzugsweise direkt auf die Abtriebswelle oder den Trommelmantel (Gehäuse) des Trommelmotors übertragen wird. Im ersten Fall ist das Gehäuse feststehend und die Abtriebswelle rotiert und im zweiten Fall sind die Wellen feststehend und der Trommelmantel rotiert. Durch diese besondere Bauweise hat der Trommelmotor einen weit besseren Wirkungsgrad als ein konventioneller Elektroantrieb.

Vorzugsweise ist der Gleichstrommotor ein Scheibenläufermotor. Ein Scheibenläufermotor ist ein Elektromotor, dessen Rotor (Läufer) die Form einer Scheibe hat. Bei den bekannten Bauformen werden die stromdurchflossenen Wicklungen in dem den Rotor einschließenden Gehäuse angeordnet. Dabei ist die Scheibe ein Permanentmagnet, wobei die Wicklungen (Spulen) feststehend auf einer Seite oder beiden Seiten der Scheibe am Gehäuse angeordnet sind und ein Magnetfeld erzeugen. Der Vorteil dieser Anordnung besteht darin, dass keine Bürsten zur Stromzuführung auf den Rotor benötigt werden und der Motor damit zuverlässiger wird. Bürstenlose Scheibenläufer sind Synchronmotoren oder auch Schrittmotoren und stellen eine Bauform des bürstenlosen Gleichstrommotors mit elektrischer Kommutierung dar. Es sind auch Scheibenläufermotoren mit mehreren Scheiben bekannt, zwischen die die Spulen feststehend hineinragen. Scheibenläufermotoren sind an der für andere Elektromotoren unüblichen Bauform leicht zu erkennen. Ihr Durchmesser ist größer als die Länge. Solche Scheibenläufermotoren werden auch als Pencake-Motoren bezeichnet.

Bei einer vorteilhaften Ausführungsform der Erfindung sind die Laufrollen des Fahrgestells an dem Querschenkel nach unten abstehend und die Andruckrolle mit dem integrierten Trommelantriebsmotor seitlich vorstehend an den Längsschenkel angeordnet, wobei das Breitenmaß der Andruckrolle und des Längsschenkels zusammengenommen weniger als 100 mm beträgt.

Bei einer Ausführungsform des erfindungsgemäßen Schweißautomaten ist zudem der Querschenkel gegenüber dem Längsschenkel senkrecht zu der Arbeitsfahrtrichtung verstellbar. Damit kann der Querschenkel mit den nicht angetriebenen Laufrollen gegenüber dem Längsschenkel, auf den die Heizeinrichtung und die Steuerung des Schweißautomaten angeordnet und der die Andruckrolle tragende Trommelantriebsmotor befestigt ist, seitlich verschoben werden. Das Fahrgestell kann somit in der Form verändert werden und zwar von einer ersten L-förmigen Formvariante, bei der der Querschenkel in Arbeitsfahrtrichtung nur links über den Längsschenkel vorsteht, über T-förmige Formvarianten, bei der sich der Querschenkel links und rechts über den Längsschenkel hinaus erstreckt, in eine zweite L-förmige Formvariante überführt werden, bei der der Querschenkel in Arbeitsfahrtrichtung nur rechts über den Längsschenkel vorsteht. Dies ermöglicht vorteilhafterweise jeweils ein randnahes Schweißen entlang von Aufkantungen oder Abkantungen der die Materialbahnen tragenden Auflagefläche, d.h. beispielsweise von sich aufwärts erstreckenden Wand-, Tür-, Schacht- oder Brüstungsanschlüssen und eben auslaufenden Stirnkantenabschlüssen von Flachdächern. Das Fahrgestell kann in den L-förmigen Formvarianten sowie in jeder beliebigen T-förmigen Formvariante natürlich wie üblich für ebene freistehende Bereiche der Auflagefläche verwendet werden. Die über den Längsschenkel seitlich vorstehende Andruckrolle sowie das in Arbeitsfahrtrichtung vor der Andruckrolle fluchtend mit der Andruckrolle angeordnete Kontaktheizelement, das als Heizkeil oder als Heizdüse ausgebildet sein kann, können somit direkt neben der Brüstung positioniert und entlang dieser verfahren werden. Dies ist möglich, da der Querschenkel gegenüber dem Kontaktheizelement und der Andruckrolle soweit versetzt werden kann, dass die jeweils endseitige Laufrolle des Querschenkels in Arbeitsfahrtrichtung vor dem Kontaktheizelement befindet und mit dem Kontaktheizelement und der Andruckrolle zumindest annähernd fluchtet.

Bei einer anderen begünstigen Ausführungsform der Erfindung ist die Breite, der Durchmesser und/oder die Form der Andruckrolle mittels rohr- oder topfförmigen Formelementen veränderbar. Die Andruckrolle ist somit modular aufgebaut. Sie kann in der Breite, im Durchmesser und in der Form je nach der Schweißanwendung zum Schweißen von Kedern, Säumen, Dachprofilen mit hinzufügbaren oder entfernbaren, auf- bzw. ansetzbaren Formelementen variiert werden. Die Formelemente können seitlich der Andruckrolle und/oder diese übergreifend an der Andruckrolle angeordnet werden. Damit können insbesondere verschiedene Schweißbreiten wie beispielsweise 40 mm, 30 mm, 20 mm abgedeckt werden. Für Dachprofile, Keder-, Saum- und Mirror-Schweißungen werden speziell geformte Formelemente verwendet, die über die Andruckrolle gestülpt oder seitlich angrenzend an diese montiert werden. Die zusätzlichen Formelemente können an der Andruckrolle angebracht oder von dieser entfernt werden, ohne dass die ganze Andruckrolle von dem Trommelantriebsmotor abmontiert entfernt werden muss.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und den beigefügten Figuren. Die einzelnen Merkmale der Erfindung können für sich allein oder zu mehreren bei unterschiedlichen Ausführungsformen der Erfindung verwirklicht sein. Es zeigen:
- Figur 1: einen erfindungsgemäßen Schweißautomat mit einem einen Längs- und einen Querschenkel aufweisenden Fahrgestell, einer Heizeinrichtung, zwei Laufrollen und einer Andruckrolle mit Blick auf die Unterseite;
- Figur 2: den Schweißautomat aus Figur 1, mit in Arbeitsfahrtrichtung von dem Längsschenkel links abstehenden Querschenkel (Figur 2a) und rechts abstehenden Querschenkel (Figur 2b), mit Blick auf die Rückseite des Schweißautomaten;
- Figur 3: die Andruckrolle aus Figur 1 in verschiedenen Ausführungsformen (Figuren 3a bis 3d), und
- Figur 4: den Trommelantriebsmotor mit der modular aufgebauten Andruckrolle des Schweißautomaten aus Figur 1 in einer Längsschnittdarstellung, mit zwei Formelementen (Figur 4a) und mit einem Formelement (Figur 4b).

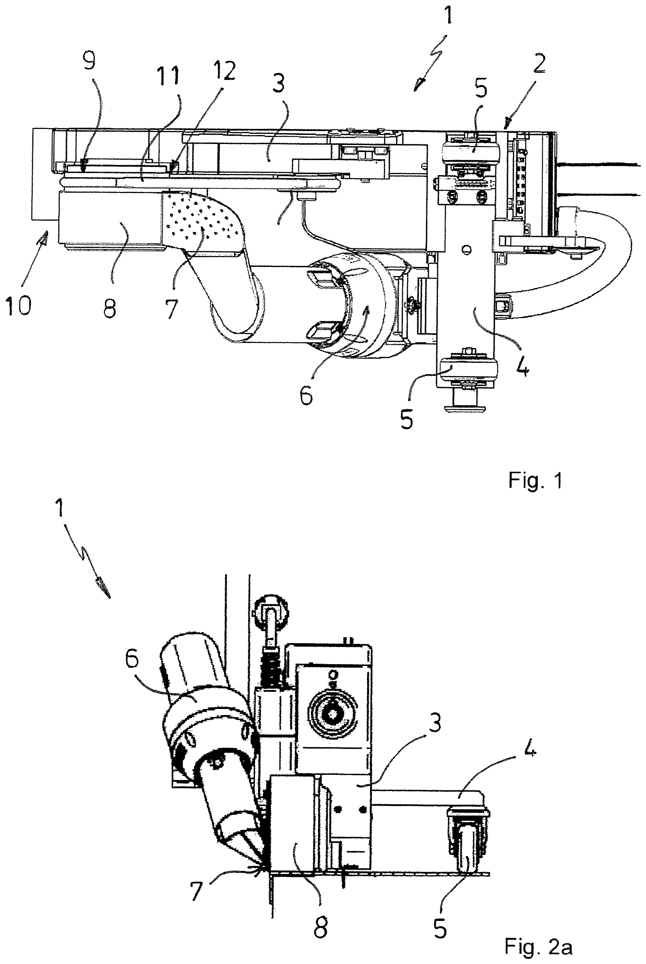

Die Figur 1 zeigt einen erfindungsgemäßen Schweißautomat 1 zum randseitigen Verbinden von überlappenden oberen Materialbahnen mit überlappten unteren Materialbahnen, die unter Wärmeeinwirkung und anschließender Druckbeaufschlagung stoffschlüssig miteinander verbindbar sind. Der Schweißautomat 1 weist ein Fahrgestell 2 mit einen sich in Arbeitsfahrtrichtung erstreckenden Längsschenkel 3 und einem orthogonal zu diesem verlaufenden Querschenkel 4 auf. An dem Querschenkel 4 sind endseitig zwei Laufrollen 5 angeordnet. Der Längsschenkel 3 trägt auf der den Laufrollen 5 abgewandten Seite des Fahrgestells 2 eine Heizeinrichtung 6 mit einem seitlich auskragenden unter den Rand der überlappenden oberen Materialbahn einführbaren Kontaktheizelement 7, das im Ausführungsbeispiel als Heizdüse für einen Heißluftstrom ausgebildet ist. An dem Längsschenkel 3 ist zudem eine auf den Rand der überlappenden oberen Materialbahn aufsetzbare Andruckrolle 8 befestigt, die in Arbeitsfahrtrichtung hinter dem Kontaktheizelement 7 angeordnet ist. Das Fahrgestell 2 ist von einem Trommelantriebsmotor 9 elektrisch antreibbar, der in die Andruckrolle 8 zumindest teilweise integriert ist.

Der Trommelantriebsmotor 9, der als bürstenloser Gleichstrommotor ausgebildet ist und ein Umlaufrädergetriebe als Untersetzungsgetriebe aufweist, ist an dem Längsschenkel 3 des Fahrgestells 2 befestigt und trägt die Andruckrolle 8 drehbar. Der Trommelantriebsmotor 9 mit der Antriebsrolle 8 ist an dem Längsschenkel 3 des Fahrgestells 2 an einem dem Querschenkel 4 fernen Ende, vorzugsweise in Längsrichtung des Längsschenkels 3 verschiebbar, festgelegt. Die Figur 1 zeigt eine Andruckrolle 8, die für das randnahes Schweißen an Abkantungen der die Materialbahnen tragenden Auflagefläche konfiguriert ist. Von der Andruckrolle 8 erstreckt sich ein Andruckriemen 11, zum Andrücken des Randes einer in der Figur nicht gezeigten überlappenden oberen Materialbahn an eine ebenfalls nicht abgebildete überlappte untere Materialbahn, von einer Eingriffsnut 12 der Andruckrolle 8 bis zu einer spannbaren Riemenführungsscheibe 13, die an dem Längsschenkel 3 in die gleiche Richtung vorstehend wie die Laufrollen 5 an dem Querschenkel 4 angeordnet ist. Der Andruckriemen 11 drückt den überlappenden Rand der oberen Materialbahn gegen die untere Materialbahn und verhindert somit, dass der Heißluftstrom aus der Heizdüse 7 unter die überlappende obere Materialbahn dringt. Durch die seitliche Abdichtung des überlappenden Randes wir der Heißluftstrom parallel zu dem Längsschenkel 3 des Fahrgestells 2 geführt, d.h. entgegen der Arbeitsfahrtrichtung des Schweißautomaten 1. Die Andruckrolle 8 trägt ein austauschbares Formelement 14, mit dem speziell die wirksame Breite der Andruckrolle 8 einstellbar ist.

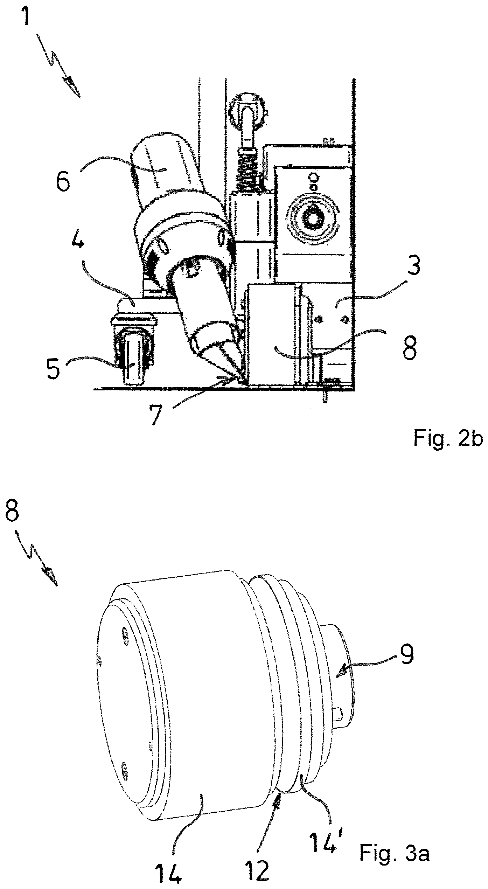

Die Figur 2a zeigt den Schweißautomat 1 aus der Figur 1 mit in Arbeitsfahrtrichtung von dem Längsschenkel 3 rechts abstehenden Querschenkel 4. Der Querschenkel 4 ist gegenüber dem Längsschenkel 3 senkrecht zu der Arbeitsfahrtrichtung verstellbar. Die Figur 2b zeigt den Schweißautomat 1 mit in Arbeitsfahrtrichtung von dem Längsschenkel 3 links abstehenden Querschenkel 4. Diese beiden Figuren stellen den Schweißautomat 1 jeweils in Arbeitsfahrtrichtung von hinten dar. Bei der Figur 2a ist der Querschenkel 4 gegenüber dem Längsschenkel 3 so weit verschoben, dass der Querschenkel 4 nicht mehr über die Heizeinrichtung 6 mit dem Kontaktheizelement 7 und die Andruckrolle 8 seitlich vorsteht. Die linksseitige Laufrolle 5 liegt in dieser Stellung mit dem Kontaktheizelement 7 und der Andruckrolle 8 auf einer gedachten Linie. Die gezeigte Stellung ist speziell für das randnahe Schweißen an Brüstungsanschlüssen der Auflagefläche oder das Kederschweißen geeignet. Bei der in der Figur 2b gezeigten Stellung erstreckt sich der Querschenkel 4 über die Heizeinrichtung 6 mit dem Kontaktheizelement 7 hinaus. Die rechtsseitige Laufrolle 5 liegt in dieser Stellung mit dem Kontaktheizelement 7 und der Andruckrolle 8 in einer Reihe. Diese Stellung ist speziell für das randnahe Schweißen an Stirnkantenabschlüssen der Auflagefläche vorgesehen.

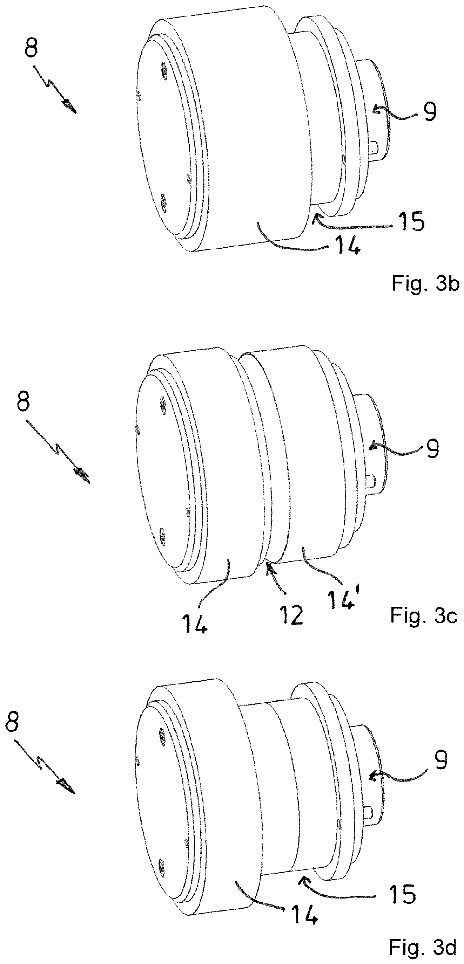

Die Figuren 3a bis 3d zeigen die modular aufgebaute Andruckrolle 8 mit verschiedenen daran angeordneten austauschbaren ersten Formelementen 14 und optional verwendbaren austauschbaren zweiten Formelementen 14'. Das Formelement 14 ist rohrförmig ausgebildet und bestimmt die wirksame Breite der Andruckrolle 8. Es ist in allen in den Figuren 3a bis 3d dargestellten Ausführungsformen vorhanden. Das zweite Formelement 14' ist ringförmig ausgebildet und kann zusätzlich zu dem Formelement 14, konzentrisch zu dem Formelement 14 angeordnet, wahlweise verwendet werden. Falls vorhanden, schließt es seitlich an das erste Formelement 14 vorzugsweise abstandslos an. Das zweite Formelement 14' kann auch mit axialem Abstand neben dem ersten Formelement 14 angeordnet sein. Es ist selbstverständlich, dass die Andruckrolle 8 auch mehr als zwei Formelemente 14, 14' aufweisen kann, die rechts oder links des ersten Formelementes 14 optional anordenbar sind. Die gegebenenfalls zusätzlich zu dem ersten Formelement 14 vorgesehenen weiteren Formelemente 14' bilden die Andruckrolle 8 für spezielle Anwendungen, beispielsweise für das randnahe Schweißen an Aufkantungen oder Abkantungen der Auflagefläche um. Beim Kederschweißen wird der Andruckriemen 11 und damit auch das Formelement 14' nicht benötigt. Die Figuren 3a und 3c veranschaulichen Ausführungsformen der Andruckrolle 8, die jeweils das erste und das zweite Formelement 14, 14' umfassen, die Figuren 3b und 3d Ausführungsformen, die nur das erste Formelement 14 beinhalten. Bei den Figuren 3a und 3b besitzt das erste Formelement 14 eine identische Breite. Dies trifft auch auf die Figuren 3c, 3d zu, wobei bei den dort gezeigten Ausführungsformen das erste Formelement 14 schmäler ist als bei Ausführungsformen der Figuren 3a und 3b. Bei der Figur 3c ist das zweite Formelement 14' breiter ausgebildet als bei der Figur 3a. Dadurch wird eine einheitliche Überdeckung des Trommelantriebmotors 9 erreicht. In den Figuren 3b und 3d ist ein Ringspalt 15 neben dem ersten Formelement 14 sichtbar, der zur Aufnahme des optionalen zweiten Formelementes 14', wie in den Figuren 3a, 3c abgebildet, vorgesehen ist. Das Formelement 14' kann natürlich auch abweichend von der in der Figuren gezeigten Form ausgebildet sein, wenn es andere Funktionen übernehmen soll.

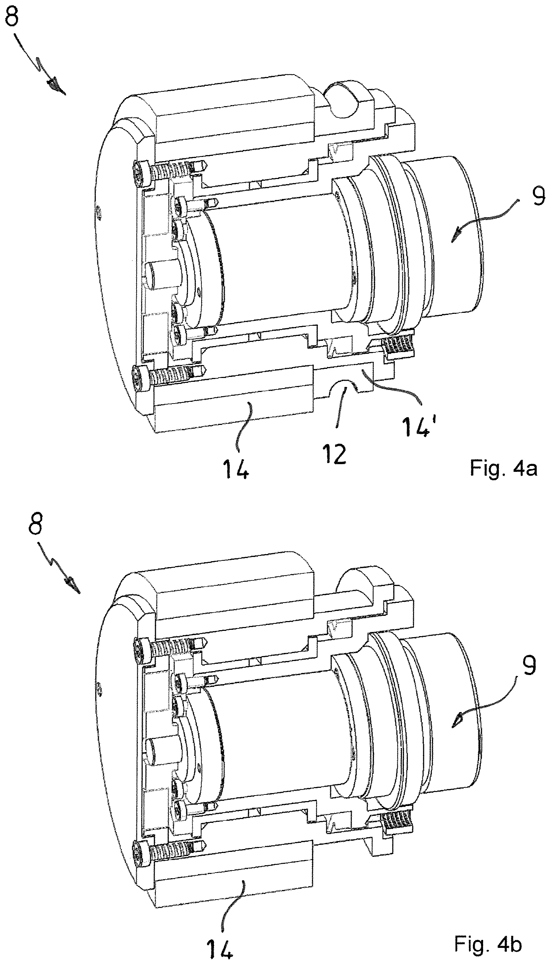

Die Figuren 4a und 4b zeigen die Andruckrolle 8 mit dem integrierten Trommelantriebsmotor 9 in einer Längsschnittdarstellung. Der Trommelantriebsmotor 9 ist ein bürstenloser Gleichstrommotor mit einem anschließenden Umlaufrädergetriebe. Der Trommelantriebsmotor 9 ist in der jeweiligen Figur 4 nur schematisch dargestellt. Der Trommelantriebsmotor 9 ist insbesondere als Scheibenläufermotor ausgebildet und in die Andruckrolle 8 integriert. Er ist mit einer Stirnseite an dem in dieser Figur nicht gezeigten Längsschenkel 3 des Fahrgestells 2 befestigt und steht teilweise über den Längsschenkel 3 vor. Auf einer dem Längsschenkel 3 abgewandten Stirnseite des Trommelantriebsmotors 9 ist die Andruckrolle 8 den Trommelantriebsmotor 9 weitgehend übergreifend befestigt. Sie wird von dem Trommelantriebsmotor 9 direkt angetrieben. In der Figur 4a trägt die Antriebsrolle 8 ein erstes rohrförmiges Formelement 14 und ein zweites rohrförmiges Formelement 14' drehfest. Das erste Formelement 14 bestimmt die Breite der Andruckrolle 8, das zweite Formelement 14' ist für die Führung und den Antrieb des Andruckriemens 11 ausgebildet. Deutlich zu erkennen ist jetzt die Eingriffsnut 12 für den Andruckriemen 11, der den Andruckriemen 11 beim Schweißen gegen die Materialbahn drückt. Die Eingriffsnut 12 ist an dem wechselbaren Formelement 14' ausgebildet, das wie das Formelement 14, das die Breite der Andruckrolle 8 bestimmt, austauschbar an der Andruckrolle 8 bzw. dem Trommelantriebsmotor 9 befestigt ist. Diese Ausführungsform ist sowohl für das Randnahschweißen, das Brüstungsschweißen oder das Schweißen auf freistehenden Flächen gleichermaßen geeignet. In der Figur 4b fehlt das Formelement 14' für die Führung und den Antrieb des Andruckriemens 11 an der Andruckrolle 8. Die Andruckrolle 8 weist nur das Formelement 14 auf, das die Breite der Andruckrolle 8 bestimmt. Diese Ausführungsform ist für das Kederschweißen geeignet.

## Patentansprüche

1. Schweißautomat (1) zum randseitigen Verbinden von überlappenden oberen Materialbahnen mit überlappten unteren Materialbahnen, die unter Wärmeeinwirkung und anschließender Druckbeaufschlagung stoffschlüssig miteinander verbindbar sind, mit einem Fahrgestell (2), an dem zumindest Laufrollen (5), eine Heizeinrichtung (6) und mindestens eine Andruckrolle (8) angeordnet sind, wobei die Heizeinrichtung (6) ein seitlich auskragendes zwischen die Ränder der Materialbahnen einführbares Kontaktheizelement (7) aufweist und die auf die Ränder der Materialbahnen aufsetzbare Andruckrolle (8) in Arbeitsfahrtrichtung hinter dem Kontaktheizelement (7) angeordnet und von einem Elektromotor mit nachgeschalteten Untersetzungsgetriebe angetrieben ist, wobei das Fahrgestell (2) L-förmig oder T-förmig mit einem sich in Arbeitsfahrtrichtung erstreckenden Längsschenkel (3) und einem orthogonal zum Längsschenkel (3) verlaufenden Querschenkel (4) ausgebildet ist, wobei das Untersetzungsgetriebe ein Umlaufrädergetriebe ist und der Elektromotor und das Untersetzungsgetriebe zu einem Trommelantriebsmotor vereint sind, **dadurch gekennzeichnet, dass** der Elektromotor ein bürstenloser Gleichstrommotor ist, der zusammen mit dem Umlaufrädergetriebe den Trommelantriebsmotor (9) bildet, wobei der Trommelantriebsmotor (9) in die Andruckrolle (8) zumindest teilweise integriert ist.

2. Schweißautomat nach Anspruch 1, **dadurch gekennzeichnet, dass** der Gleichstrommotor ein Scheibenläufermotor ist.

3. Schweißautomat nach Anspruch 1 oder 2, **dadurch gekennzeichnet, dass** der Antriebsmotor eine Leistungsaufnahme von wenigstens 30 Watt, vorzugsweise mindestens 50 Watt aufweist.

4. Schweißautomat nach einem der vorstehenden Ansprüche, **dadurch gekennzeichnet, dass** das Umlaufrädergetriebe ein Drehmoment von mindestens 6 Nm abgibt.

5. Schweißautomat nach einem der vorstehenden Ansprüche, **dadurch gekennzeichnet, dass** die Laufrollen (5) an dem Querschenkel (4) nach unten abstehend und die Andruckrolle (8) mit dem integrierten Trommelantriebsmotor (9) seitlich vorstehend an dem Längsschenkel (3) angeordnet ist, wobei das Breitenmaß der Andruckrolle (8) und des Längsschenkels (3) zusammengenommen weniger als 100 mm beträgt.

6. Schweißautomat nach einem der vorstehenden Ansprüche, **dadurch gekennzeichnet, dass** der Querschenkel (4) gegenüber dem Längsschenkel (3) senkrecht zu der Arbeitsfahrtrichtung verstellbar ist.

7. Schweißautomat nach einem der vorstehenden Ansprüche, **dadurch gekennzeichnet, dass** die Breite, der Durchmesser und/oder die Form der Andruckrolle (8) mittels rohr- oder topfförmigen Formelementen (14, 14') veränderbar ist.

8. Schweißautomat nach einem der vorstehenden Ansprüche, **dadurch gekennzeichnet, dass** die Heizeinrichtung (6) elektrisch betrieben ist.

## Claims

1. A welding machine (1) for connecting the edges of overlapping upper sheets of material with overlapped lower sheets of material, which are materially connectable together under the action of heat and the subsequent application of pressure, including a carriage (2), on which at least running rollers (5), a heating device (6) and at least one pressure roller (8) are arranged, wherein the heating device (6) includes a laterally projecting contact heating element (7), which may be introduced between the edges of the sheets of material and the pressure roller (8), which may be placed on the edges of the sheets of material, is arranged downstream of the contact heating element (7) in the working direction of movement and is driven by an electric motor with subsequent reduction gearing, wherein the carriage (2) is of L-shaped or T-shaped construction with a longitudinal limb (3) extending in the working direction of movement and a transverse limb (4) extending orthogonally to the longitudinal limb (3), wherein the reduction gearing is an epicyclic gear train and the electric motor and the reduction gearing are combined to form a drum drive motor, **characterised in that** the electric motor is a brushless direct current motor, which together with the epicyclic gear train constitutes the drum drive motor (9), wherein the drum drive motor (9) is at least partially integrated into the pressure roller (8).

2. A welding machine as claimed in Claim 1, **characterised in that** the direct current motor is a disc motor.

3. A welding machine as claimed in Claim 1 or 2, **characterised in that** the drive motor has a power consumption of at least 30 watts, preferably at least 50 watts.

4. A welding machine as claimed in one of the preceding claims, **characterised in that** the epicyclic gear train delivers a torque of at least 6 Nm.

5. A welding machine as claimed in one of the preceding claims, **characterised in that** the running rollers (5) are arranged on the transverse limb (4) projecting downwardly and the pressure roller (8) is arranged with the integrated drum drive motor (6) laterally projecting on the longitudinal limb (3), wherein the width dimension of the pressure roller (8) and of the longitudinal limb (3) taken together is less than 100 mm.

6. A welding machine as claimed in one of the preceding claims, **characterised in that** the transverse limb (4) is adjustable perpendicularly to the working direction of movement with respect to the longitudinal limb (3).

7. A welding machine as claimed in one of the preceding claims, **characterised in that** the width, the diameter and/or the shape of the pressure roller (8) is variable by means of tubular or cup-shaped shaping elements (14, 14').

8. A welding machine as claimed in one of the preceding claims, **characterised in that** the heating device (6) is electrically operated.

## Revendications

1. Soudeuse automatique (1) conçue pour relier les bords de bandes supérieures de matériau chevauchantes, et de bandes inférieures de matériau chevauchées, qui peuvent être reliées matériellement les unes aux autres sous l'action de la chaleur et avec sollicitation consécutive par une pression, comprenant un châssis de roulement (2) sur lequel sont au moins implantés des roulettes de déplacement (5), un dispositif de chauffage (6) et au moins un rouleau presseur (8), sachant que ledit dispositif de chauffage (6) comporte un élément de contact chauffant (7) qui fait saillie latéralement et peut être engagé entre les bords desdites bandes de matériau, et que ledit rouleau presseur (8), pouvant être appliqué sur lesdits bords des bandes de matériau, est placé derrière ledit élément de contact chauffant (7) dans la direction de déplacement opérant, et est entraîné par un moteur électrique en aval duquel un engrenage réducteur est installé, ledit châssis de roulement (2) étant réalisé avec configuration en L ou configuration en T incluant une branche longitudinale (3) qui s'étend dans la direction de déplacement opérant, et une branche transversale (4) dont le tracé décrit un angle droit avec celui de ladite branche longitudinale (3), sachant que ledit engrenage réducteur est un engrenage planétaire, et que le moteur électrique et ledit engrenage réducteur sont regroupés en un moteur d'entraînement à tambour, **caractérisée par le fait que** le moteur électrique est un moteur à courant continu sans balai, qui forme le moteur d'entraînement à tambour (9) en association avec l'engrenage planétaire, ledit moteur d'entraînement à tambour (9) étant au moins partiellement intégré dans le rouleau presseur (8).

2. Soudeuse automatique selon la revendication 1, **caractérisée par le fait que** le moteur à courant continu est un moteur à rotor discoïdal.

3. Soudeuse automatique selon la revendication 1 ou 2, **caractérisée par le fait que** le moteur d'entraînement présente une consommation de puissance d'au moins 30 watts, de préférence d'au moins 50 watts.

4. Soudeuse automatique selon l'une des revendications précédentes, **caractérisée par le fait que** l'engrenage planétaire fournit un couple de rotation d'au moins 6 Nm.

5. Soudeuse automatique selon l'une des revendications précédentes, **caractérisée par le fait que** les roulettes de déplacement (5) sont implantées sur la branche transversale (4) avec saillie vers le bas et le rouleau presseur (8) est implanté sur la branche longitudinale (3) avec dépassement latéral, conjointement au moteur d'entraînement à tambour (9) intégré, la cote en largeur dudit rouleau presseur (8) et de ladite branche longitudinale (3) mesurant moins de 100 mm en valeur cumulée.

6. Soudeuse automatique selon l'une des revendications précédentes, **caractérisée par le fait que** la branche transversale (4) peut être réglée, vis-à-vis de la branche longitudinale (3), perpendiculairement à la direction de déplacement opérant.

7. Soudeuse automatique selon l'une des revendications précédentes, **caractérisée par le fait que** la largeur, le diamètre et/ou la forme du rouleau presseur (8) peu(ven)t être modifié(e)(s) au moyen d'éléments profilés (14, 14') tubulaires ou en forme de pot.

8. Soudeuse automatique selon l'une des revendications précédentes, **caractérisée par le fait que** le dispositif de chauffage (6) est actionné électriquement.
